# EUROPÄISCHE PATENTSCHRIFT

(11) **EP 1 314 272 B1**
(45) Veröffentlichungstag und Bekanntmachung des Hinweises auf die Patenterteilung: **09.03.2005**
(21) Anmeldenummer: 01971952.5
(22) Anmeldetag: 22.08.2001
(51) Int. Cl.: H04J 3/04, G06F 13/40, H04L 12/40

(54) **BASISELEMENT FÜR EINE MULTIPLEXERSTRUKTUR SOWIE ENTSPRECHENDE MULTIPLEXERSTRUKTUR**
BASE ELEMENT FOR A MULTIPLEXER STRUCTURE AND CORRESPONDING MULTIPLEXER STRUCTURE
ELEMENT DE BASE POUR STRUCTURE DE MULTIPLEXAGE ET STRUCTURE DE MULTIPLEXAGE CORRESPONDANTE

(30) Priorität: 29.08.2000 DE 10042380
(43) Veröffentlichungstag der Anmeldung: 28.05.2003
(73) Patentinhaber: Infineon Technologies AG, 81669 München (DE)
(72) Erfinder: GLOS, Thomas, 40489 Düsseldorf (DE)
(74) Vertreter: Banzer, Hans-Jörg, Dipl.-Ing.
(86) Internationale Anmeldenummer: PCT/EP2001/009706
(87) Internationale Veröffentlichungsnummer: WO 2002/019618

(56) Entgegenhaltungen:
- WO-A-00/55737
- US-A- 4 542 496
- US-A- 5 127 067
- US-A- 5 761 208

## Beschreibung

Die vorliegende Erfindung betrifft ein Basiselement, welches zum Aufbau einer Multiplexerstruktur verwendet werden kann, sowie eine mehrere derartige Basiselemente umfassende Multiplexerstruktur, die insbesondere als Ersatz für einen Tristate-Bus verwendet werden kann.

Ein Tristate-Bus kommt bevorzugt überall dort zur Anwendung, wo ein Datenaustausch zwischen unterschiedlichen Peripherie- oder Datensende- bzw. Datenempfangseinheiten realisiert werden soll. Mögliche Anwendungsgebiete sind somit beispielsweise die Computer- oder Chiptechnik etc.

In vielen Designs wird der Tristate-Bus durch eine kaskadierte Multiplexerstruktur ersetzt, in der alle Bus- bzw. Datensignale der angeschlossenen Datensende- und Datenempfangseinheiten über die letzte Stufe der Kaskade laufen müssen. Ein entsprechendes Beispiel ist in Figur 4 dargestellt. Wie aus Figur 4 ersichtlich ist, sind mehrere nachfolgend der Einfachheit halber als "Module" bezeichnete Datensende- und Datenempfangseinheiten 1 kaskadenartig über logische OR-Gatter 7 verschaltet. Jedes Modul 1 weist einen Dateneingang IN auf, über den ein entsprechendes modulspezifisches Datensignal dem Tristate-Bus bzw. der Multiplexerstruktur zugeführt werden kann. Zu diesem Zweck ist in Figur 4 für jedes Modul 1 ein logisches AND-Gatter 6 dargestellt, dem einerseits das Dateneingangssignal IN und andererseits ein Freigabesignal EN zugeführt ist, wobei mit Hilfe des Freigabesignals EN die Durchschaltung bzw. Ausgabe des entsprechenden Datensignals IN gesteuert werden kann. Alle Datensignale der angeschlossenen Module 1 müssen über die letzte Stufe der dargestellten Kaskade laufen. Diese letzte Stufe verteilt dann alle Eingangssignale IN der Multiplexerstruktur zurück auf die Eingänge der treibenden Module 1. Ein mit dieser kaskadierten Multiplexerstruktur verbundener Nachteil besteht darin, dass an einer zentralen Stelle im Schaltungslayout alle Eingangssignale IN zusammenlaufen und von dort über Puffer 8 zurück an alle angeschlossenen Module 1 geleitet werden müssen, was eine ungünstige Lastverteilung zur Folge hat. Hierdurch entsteht an dieser zentralen Stelle im Schaltungslayout eine hohe Elementdichte ("Routing Congestion") sowie die Notwendigkeit der in Figur 4 gezeigten Puffer 8, welche zusammen einen sogenannten "Buffer Tree" bilden.

Aus der Druckschrift US 4,542,496 A ist ein aus mehreren Knoten aufgebautes schleifenartiges Übertragungssystem bekannt, wobei jeder Knoten zwei bidirektionale Anschlussstellen mit jeweils einem Signaleingang und einem Signalausgang aufweist. Jeder Knoten umfasst eine Logikschaltung, die es ermöglicht, abhängig von einem Steuersignal ein an dem Signaleingang der einen Anschlussstelle anliegendes Signal wahlweise an den Signalausgang derselben Anschlussstelle oder an den Signalausgang der jeweils anderen Anschlussstelle weiterzuleiten, um eine Unterbrechung in dem schleifenartigen Übertragungssystem zu überbrücken.

Der vorliegenden Erfindung liegt die Aufgabe zugrunde, ein Basiselement für eine alternative Multiplexerstruktur sowie eine mehrere derartige Basiselemente aufweisende Multiplexerstruktur bereitzustellen, die als Ersatz für einen Tristate-Bus verwendet werden kann und die mit der Verwendung einer kaskadierten Multiplexerstruktur verbundenen Nachteile, insbesondere eine ungünstige Lastverteilung innerhalb der Schaltung, vermeidet.

Diese Aufgabe wird erfindungsgemäß durch ein Basiselement mit den Merkmalen des Anspruchs 1 bzw. eine mehrere derartige Basiselemente aufweisende Multiplexerstruktur mit den Merkmalen des Anspruchs 6 gelöst. Die Unteransprüche definieren jeweils bevorzugte und vorteilhafte Ausführungsformen der vorliegenden Erfindung.

Erfindungsgemäß wird ein Basis- oder Knotenelement vorgeschlagen, welches zum Aufbau einer verteilten ultiplexerstruktur verwendet werden kann. Dieses Basiselement umfasst mindestens obei Anschlussstellen, die jeweils einen Signaleingang und einen Signalausgang aufweisen. Dabei ist das Basiselement derart ausgestaltet, dass mindestens eine dieser Anschlussstellen bzw. Ports rückkopplungsfrei und mindestens eine andere dieser Anschlussstellen rückkoppelnd ist, so dass an dieser Anschlussstelle ein weiteres Basis- oder Knotenelement angeschlossen werden kann. Dies kann durch geeignete logische Schaltungsmittel realisiert werden, welche gewährleisten, dass mindestens eine Anschlussstelle rückkopplungsfrei und mindestens eine andere Anschlussstelle rückkoppelnd ist.

Mit Hilfe derartiger Basis- oder Knotenelemente können Ketten von gleich aufgebauten Knoten gebildet werden, an denen wiederum mehrere Datenein- und Datenausgabeeinheiten bzw. Module angeschlossen sein können. Die einzelnen Knotenelemente sind vorzugsweise derart ausgestaltet, dass jeder Knotenausgang immer die gleiche Anzahl von Dateneingängen treibt, was eine sehr günstige Lastverteilung zur Folge hat. Zudem resultieren hieraus günstige elektrische Eigenschaften (kleinere Treiber, keine kurzzeitige Überlastung durch Überlappung) bei einfachem Handling (gleichartig aufgebaute Elemente, Timing-Verifikation mit Standardmethodik) und günstigem Layout-Verhalten (gleichmäßige Elementdichte). Gleichzeitig können Anschlussstellen, bei denen keine Rückkopplungsfreiheit erforderlich ist, rückkoppelnd ausgestaltet werden, wodurch der Aufwand für das Basiselement verringert wird.

Bei der erfindungsgemäßen Multiplexerstruktur sind zwei miteinander verbundene Basiselemente so miteinander verbunden, dass jedes Basiselement mit dem anderen Basiselement über eine nicht rückkoppelnde Anschlussstelle verbunden ist. Auf diese Weise liegen zwischen zwei Basiselementen immer zwei nicht rückkoppelnde Anschlussstellen. Damit kann vermieden werden, dass sich Rückkopplungen über mehrere Basiselemente hinweg ausbilden, die unter bestimmten Umständen auftreten könnten, wenn zwischen zwei miteinander verbundenen Basiselementen jeweils nur ein rückkopplungsfreier Eingang liegen würde.

Die vorliegende Erfindung eignet sich insbesondere für Chip-Bausteine mit einem On-Chip-Tristate-Bus. Selbstverständlich ist die vorliegende Erfindung jedoch auch für alle anderen Anwendungsbereiche geeignet, wo als Ersatz für einen Tristate-Bus eine Multiplexerstruktur mit mehreren Datensende- und Datenempfangseinheiten ("Modulen") verwendet werden soll.

Die vorliegende Erfindung wird nachfolgend näher unter Bezugnahme auf die beigefügte Zeichnung anhand bevorzugter Ausführungsbeispiele erläutert.
Figur 1 zeigt den Aufbau und die Verschaltung von Basis- bzw. Knotenelementen gemäß einem bevorzugten Ausführungsbeispiel der vorliegenden Erfindung,
Figur 2 zeigt eine aus mehreren in Figur 1 dargestellten Knotenelementen aufgebaute verteilte Multiplexerstruktur als Ersatz für einen Tristate-Bus gemäß einem bevorzugten Ausführungsbeispiel der vorliegenden Erfindung,
Figur 3 zeigt den Aufbau und die Verschaltung von Knotenelemente mit Rückkopplung, und
Figur 4 zeigt eine kaskadierte Multiplexerstruktur gemäß dem Stand der Technik.

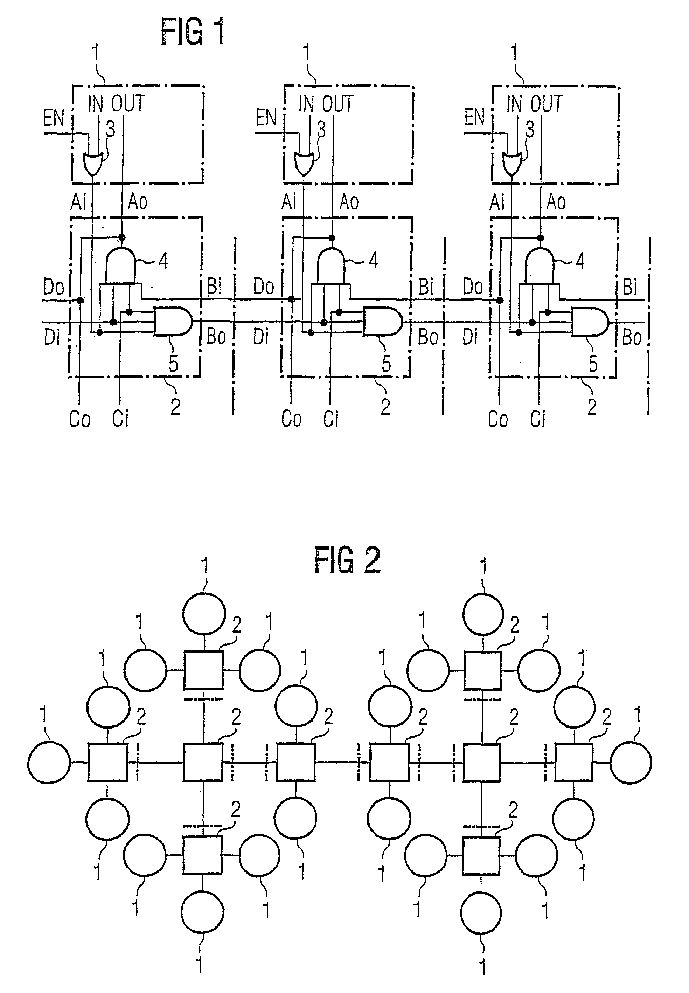

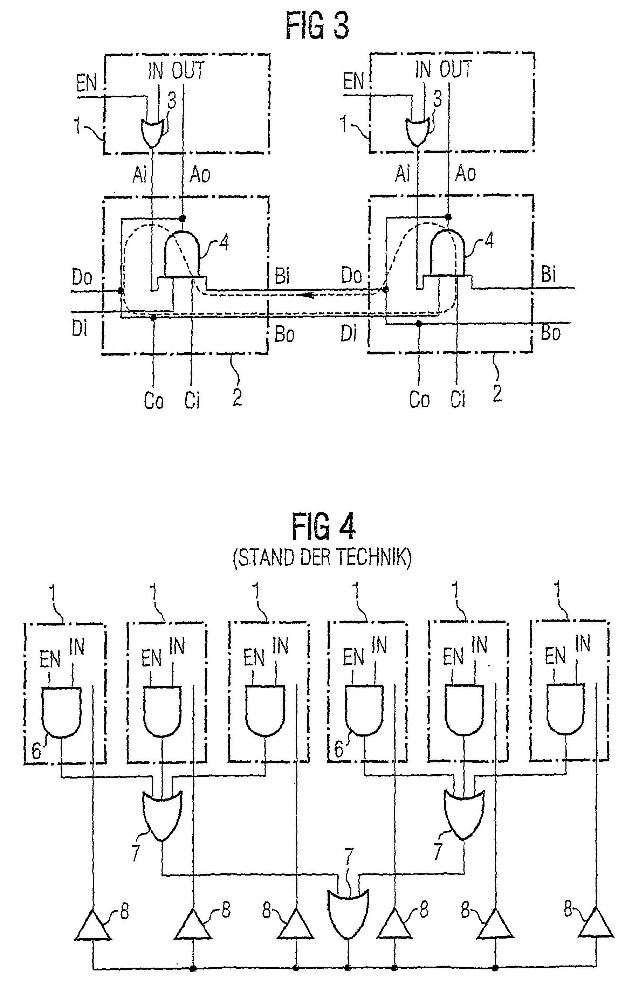

Bevor auf die in Figur 1 und Figur 2 gezeigten erfindungsgemäßen Ausführungsbeispiele näher eingegangen wird, soll zunächst unter Bezugnahme auf Figur 3 eine Knotenstruktur erläutert werden, welche die Grundlage der vorliegenden Erfindung bildet, jedoch an einer Verbindungsstelle zwischen zwei Knoten eine unerwünschte Rückkopplung aufweist.

Wie aus Figur 3 ersichtlich ist, weist jedes Knoten- bzw. Basiselement 2 vier Anschlussstellen bzw. Anschlussports mit jeweils einem Signaleingang Ai, Bi, Ci, Di und einem Signalausgang Ao, Bo, Co, Do auf. An die einzelnen Anschlussports können jeweils Module 1 angeschlossen sein, bei denen es sich im Prinzip um Datensende- und Datenempfangseinheiten handelt, welche untereinander über die dargestellte Knoten- bzw. Multiplexerstruktur Daten austauschen. Die Knoten 2 sind derart ausgestaltet, dass ein an einem Anschlussport eingehendes Signal an die Datenausgänge aller vier Anschlussports weitergeleitet wird. Ein einfacher Aufbau eines Knotens 2 kann durch ein Vierfach-OR-Gatter realisiert werden. Bei dem in Figur 3 gezeigten Beispiel ist jedoch ein Knoten 2 mit einem Vierfach-AND-Gatter realisiert, wobei die angeschlossenen Module 1 im Ruhezustand logisch "1" auf den Bus treiben. Dies wird dadurch erzielt, dass jedes Modul 1 ein logisches OR-Gatter aufweist, dem einerseits das entsprechende Dateneingangssignal IN und ein Freigabesignal EN zugeführt ist, wobei das Freigabesignal EN jeweils auf niedrigem Pegel aktiv ist. Nur das jeweils aktive Modul 1 kann auch eine logische "0" auf den Bus geben.

Wie aus Figur 3 ersichtlich ist, entsteht bei einer Verbindung von derartig aufgebauten Knoten 2 eine in Figur 3 gestrichelt dargestellte Rückkopplungsschleife, die an denjenigen Anschlussports erwünscht ist, an denen Module 1 angeschlossen sind, um das an einem Anschlussport anliegende Dateneingangssignal an ein an einem anderen Anschlussport angeschlossenes Modul 1 in Form eines Datenausgangssignal OUT auszugeben. Der Nachteil der in Figur 3 gezeigten Knotenstruktur ist jedoch, dass aufgrund dieser Rückkopplung nicht zwei Knoten 2 miteinander verbunden werden können, da der resultierende Bus durch die somit gebildete logische Schleife nicht funktioniert, wie es auch aus der Darstellung von Figur 3 bezüglich des Anschlussports Bi, Bo des linken Knotens 2 und des Anschlussports Do, Di des rechten Knotens 2 ersichtlich ist.

In Figur 1 sind mehrere miteinander verschaltete Knoten 2 gemäß der vorliegenden Erfindung dargestellt, wobei das zuvor beschriebene Problem derart gelöst wird, dass jeder Knoten 2 einen rückkopplungsfreien Anschlussport besitzt, an den ein weiterer Knoten 2 angeschlossen werden kann. Hiermit ist es möglich, ein Netzwerk von Knoten 2 aufzubauen. Bei der Verschaltung der Knoten 2 zu einem verteilten Bus bzw. zu einer verteilten Multiplexerstruktur ist darauf zu achten, dass jeweils zwischen zwei benachbarten Knoten 2 stets mindestens ein rückkopplungsfreier Anschlussport liegt und die Module 1 an Anschlussports mit Rückkopplung angeschlossen sind. In Figur 1 sind die rückkopplungsfreien Anschlussports der Knoten 2 jeweils mit einer gestrichelten Linie versehen und umfassen jeweils den Signaleingang Bi und den Signalausgang Bo. Alle anderen Anschlussports Ai, Ao, Ci, Co und Di, Do weisen eine Rückkopplung auf.

Bei dem in Figur 1 dargestellten Ausführungsbeispiel ist die Rückkopplungsfreiheit an dem Anschlussport Bi, Bo dadurch realisiert, dass ein Vierfach-AND-Gatter 4 vorgesehen ist, dem die Eingangssignale sämtlicher Anschlussport zugeführt sind, wobei das Ausgangssignal dieses Vierfach-AND-Gatters 4 lediglich an die Signalausgänge Ao, Co, Do - nicht jedoch an den Signalausgang Bo - weitergeleitet wird. Des weiteren ist ein logisches Dreifach-AND-Gatter 5 vorgesehen, dessen Eingänge mit den Signaleingängen Ai, Ci, Di der Anschlussports mit Rückkopplung verbunden sind, wobei das Ausgangssignal dieses logischen Dreifach-AND-Gatters 5 den Signalausgang Bo des Anschlussports ohne Rückkopplung treibt. Auf diese Weise wird gewährleistet, dass an der Verbindungsstelle zwischen zwei benachbarten Knoten 2, d.h. zwischen dem Anschlussport Bi, Bo des einen Knotens und dem Anschlussport Do, Di des anderen Knotens, keine Rückkopplung auftritt.

Wie bei der in Figur 3 dargestellten Struktur ist auch bei dem in Figur 1 dargestellten erfindungsgemäßen Ausführungsbeispiel der innere Aufbau der Knoten 2 durch logische AND-Gatter 4, 5 realisiert, so dass die angeschlossenen Module 1 im Ruhezustand logisch "1" auf den Bus geben müssen. Dies wird wiederum mit Hilfe eines logischen OR-Gatters 3 realisiert, welches neben dem jeweiligen Dateneingangssignal IN ein Freigabesignal EN empfängt, welches auf niedrigem Pegel aktiv ist. Nur jeweils das aktive Modul 1 kann auch eine logische "0" auf den Bus geben.

Selbstverständlich kann auch eine äquivalente Schaltung, in der die logischen Knoten 2 mit logischen OR-Gattern aufgebaut sind, realisiert werden. Ebenso sind selbstverständlich auch Knoten 2 mit mehr oder weniger Anschlussports denkbar, wobei jedoch stets darauf zu achten ist, dass mindestens ein Anschlussport rückkopplungsfrei ist.

Wie bereits erwähnt worden ist, kann mit Hilfe der erfindungsgemäß ausgestalteten Knoten 2 eine Multiplexerstruktur mit verteilter Last ("verteilte Multiplexerstruktur") gebildet werden, wobei die eingangs beschriebenen Nachteile entfallen, da Ketten von gleich aufgebauten Knoten 2 realisiert werden können, wobei jeder Knotenausgang stets die gleiche Anzahl von Eingängen treibt. Bei dem vorliegenden Ausführungsbeispiel besitzt jeder Knoten 2 vier Anschlussports mit jeweils einem Datenein- und einem Datenausgang, an die entweder weitere Knoten 2 oder Module 1 angeschlossen werden können. Da die Laufzeit zwischen den Modulen 1 von der Anzahl der in Reihe geschalteten Knoten 2 abhängt, sollte eine entsprechend günstige Knotentopologie gewählt werden.

In Figur 2 ist ein Beispiel für eine derartige günstige Knotentopologie dargestellt, welche zur Realisierung einer verteilten Multiplexerstruktur verwendet werden kann. Die Anschlussports der Knoten 2, welche rückkopplungsfrei sind, sind wiederum jeweils mit einer gestrichelten Linie versehen.

## Patentansprüche

1. Basiselement für eine Multiplexerstruktur,
mit mindestens drei Anschlussstellen, die jeweils einen Signaleingang (Ai, Bi, Ci, Di) und einen Signalausgang (Ao, Bo, Co, Do) aufweisen, und
mit Signalverteilungsmitteln (4, 5), welche mit den einzelnen Signaleingängen und Signalausgängen verschaltet sind, wobei die Signalverteilungsmittel (4, 5) derart ausgestaltet sind, dass sie für mindestens eine bestimmte Anschlussstelle eine Weiterleitung eines am Signaleingang (Bi) dieser bestimmten Anschlussstelle anliegenden Signals an den Signalausgang (Bo) derselben bestimmten Anschlussstelle unterbinden und für mindestens eine andere Anschlussstelle ein am Signaleingang (Ai, Ci, Di) dieser anderen Anschlussstelle anliegendes Signal an den Signalausgang (Ao, Co, Do) derselben anderen Anschlussstelle weiterleiten, und wobei die Signalverteilungsmittel (4, 5) derart ausgestaltet sind, dass sie das am Signaleingang (Bi) der bestimmten Anschlussstelle anliegende Signal an die Signalausgänge (Ao, Co, Do) aller anderen Anschlussstellen und ein an einem Signaleingang (Ai, Ci, Di) einer anderen Anschlussstelle anliegendes Signal an den Signalausgang (Bo) der bestimmten Anschlussstelle weiterleiten.

2. Basiselement nach Anspruch 1,
**dadurch gekennzeichnet**
**dass** das Basiselement vier Anschlussstellen mit jeweils einem Signaleingang (Ai, Bi, Ci, Di) und einem Signalausgang (Ao, Bo, Co, Do) aufweist.

3. Basiselement nach einem der vorhergehenden Ansprüche,
**dadurch gekennzeichnet,**
**dass** die Signalverteilungsmittel eine erste logische Schaltung (4) umfassen, welche die Signaleingänge (Ai, Bi, Ci, Di) sämtlicher Anschlussstellen mit den Signalausgängen (Ao, Co, Do) derjenigen Anschlussstellen, welche nicht der bestimmten Anschlussstelle entsprechen, verbindet.

4. Basiselement nach einem der vorhergehenden Ansprüche,
**dadurch gekennzeichnet,**
**dass** die Signalverteilungsmittel eine zweite logische Schaltung (5) umfassen, welche die Signaleingänge (Ai, Ci, Di) derjenigen Anschlussstellen, welche nicht der bestimmten Anschlussstelle entsprechen, mit dem Signalausgang (Bo) der bestimmten Anschlussstelle verbindet.

5. Basiselement nach Anspruch 3 oder 4,
**dadurch gekennzeichnet,**
**dass** die erste logische Schaltung (4) und/oder die zweite logische Schaltung (5) eine logische AND-Schaltung oder eine logische OR-Schaltung ist.

6. Multiplexerstruktur,
mit mehreren Basiselementen (2) und mehreren an die Basiselemente (2) angeschlossenen Sende/Empfangseinheiten (1) zum Austausch von Daten untereinander über die Basiselemente (2),
wobei jedes Basiselement (2) mindestens drei Anschlussstellen mit jeweils einem Dateneingang (Ai, Bi, Ci, Di) und einem Datenausgang (Ao, Bo, Co, Do) aufweist,
wobei jedes Basiselement (2) mit den einzelnen Dateneingängen und Datenausgängen verschaltete Datenverteilungsmittel (4, 5) aufweist,
wobei die Datenverteilungsmittel (4, 5) derart ausgestaltet sind, dass sie für mindestens eine bestimmte Anschlussstelle, an welcher das jeweilige Basiselement (2) mit einen anderen Basiselement (2) verbunden ist, eine Weiterleitung eines am Dateneingang (Bi) dieser bestimmten Anschlussstelle anliegenden Datensignals an den Datenausgang (Bo) derselben bestimmten Anschlussstelle unterbinden, und
dass sie für mindestens eine andere Anschlussstelle, an welcher eine der mehreren Sende/Empfangseinheiten (1) angeschlossen ist, ein am Signaleingang (Ai, Ci, Di) dieser anderen Anschlussstelle anliegendes Signal an den Signalausgang (Ao, Co, Do) derselben anderen Anschlussstelle weiterleiten.

7. Multiplexerstruktur nach Anspruch 6,
**dadurch gekennzeichnet,**
**dass** die Basiselemente (2) nach einem der Ansprüche 1 - 5 ausgestaltet sind.

8. Multiplexerstruktur nach Anspruch 6 oder 7,
**dadurch gekennzeichnet,**
**dass** jeweils zwei Basiselemente (2) über mindestens eine bestimmte Anschlussstelle (Bi, Bo) miteinander verbunden sind.

9. Multiplexerstruktur nach einem der Ansprüche 6 - 8,
**dadurch gekennzeichnet,**
**dass** eine Sende/Empfangseinheit (1) jeweils an einer Anschlussstelle eines Basiselements (2) angeschlossen ist, welche nicht der bestimmten Anschlussstelle (Bi, Bo) entspricht.

10. Multiplexerstruktur nach einem der Ansprüche 6-9,
**dadurch gekennzeichnet,**
**dass** zwei miteinander verbundene Basiselemente (2) untereinander jeweils mittels einer Anschlussstelle verbunden sind, für die die Datenverteilungsmittel (4, 5) eine Weiterleitung eines am Dateneingang (Bi) dieser Anschlussstelle anliegenden Datensignals an den Datenausgang (Bo) dieser Anschlussstelle unterbinden.

## Claims

1. Base element for a multiplexer structure,
with at least three connection points which each comprise a signal input (Ai, Bi, Ci, Di) and a signal output (Ao, Bo, Co, Do), and
with signal distribution means (4, 5), which are connected to the individual signal inputs and signal outputs, whereby the signal distribution means (4, 5) are designed in such a way that for at least one particular connection point they prevent a signal at the signal input (Bi) of this particular connection point being passed on to the signal output (Bo) of the same particular connection point and for at least another connection point they pass on a signal at the signal input (Ai, Ci, Di) of this other connection point to the signal output (Ao, Co, Do) of the same other connection point, and
whereby the signal distribution means (4, 5) are designed in such a way that they pass on the signal at the signal input (Bi) of the particular connection point to the signal outputs (Ao, Co, Do) of all other connection points and a signal at a signal input (Ai, Ci, Di) of another connection point to the signal output (Bo) of the particular connection point.

2. Base element according to claim 1,
**characterized in that**
the base element has four connection points in each case with a signal input (Ai, Bi, Ci, Di) and a signal output (Ao, Bo, Co, Do).

3. Base element according to any one of the preceding claims,
**characterized in that**
the signal distribution means include a first logic circuit (4), which connects the signal inputs (Ai, Bi, Ci, Di) of all connection points with the signal outputs (Ao, Co, Do) of those connection points, which do not correspond to the particular connection point.

4. Base element according to any one of the preceding claims,
**characterized in that**
the signal distribution means include a second logic circuit (5), which connects the signal inputs (Ai, Ci, Di) of those connection points, which do not correspond to the particular connection point, with the signal output (Bo) of the particular connection point.

5. Base element according to claim 3 or 4,
**characterized in that**
the first logic circuit (4) and/or the second logic circuit (5) are a logic AND circuit or a logic OR circuit.

6. Multiplexer structure,
with several base elements (2) and several transmission/receiving units (1) connected to the base elements (2) for the exchange of data between one another via the base elements (2),
whereby each base element (2) has at least three connection points in each case with a data input (Ai, Bi, Ci, Di) and a data output (Ao, Bo, Co, Do),
whereby each base element (2) has data distribution means (4, 5) connected to the individual data inputs and data outputs, whereby the data distribution means (4, 5) are designed in such a way that for at least one particular connection point, at which the respective base element (2) is connected to another base element (2), they prevent a data signal at the data input (Bi) of this particular connection point being passed on to the data output (Bo) of the same particular connection point and that for at least another connection point, at which one of the several transmission/receiving units (1) is connected, they pass on a signal at the signal input (Ai, Ci, Di) of this other connection point to the signal output (Ao, Co, Do) of the same other connection point.

7. Multiplexer structure according to claim 6,
**characterized in that**
the base elements (2) are designed according to any one of claims 1 - 5.

8. Multiplexer structure according to claim 6 or 7,
**characterized in that**
in each case two base elements (2) are interconnected via at least one particular connection point (Bi, Bo).

9. Multiplexer structure according to any one of claims 6 - 8,
**characterized in that**
a transmission/receiving unit (1) in each case is coupled to a connection point of a base element (2), which does not correspond to the particular connection point (Bi, Bo).

10. Multiplexer structure according to any one of claims 6 - 9,
**characterized in that**
two base elements (2) connected to one another are connected to one another by means of a connection point in each case, for which the data distribution means (4, 5) prevent a data signal at the data input (Bi) of this connection point being passed on to the data output (Bo) of this connection point.

## Revendications

1. Elément de base pour une structure de multiplexage, avec au moins trois points de connexion, qui présentent chacun une entrée de signal (Ai, Bi, Ci, Di) et une sortie de signal (Ao, Bo, Co, Do), et avec des moyens de répartition des signaux (4, 5) qui sont reliés aux diverses entrées de signal et sorties de signal, les moyens de répartition de signaux (4, 5) étant configurés de telle façon qu'ils interrompent pour au moins un point de connexion déterminé la transmission d'un signal présent à l'entrée de signal (Bi) de ce point de connexion déterminé vers la sortie de signal (Bo) de ce même point de connexion déterminé et qu'ils transmettent pour au moins un autre point de connexion un signal présent à l'entrée de signal (Ai, Ci, Di) de cet autre point de connexion vers la sortie de signal (Ao, Co, Do) de ce même autre point de connexion, et les moyens de répartition de signaux (4, 5) étant configurés de telle façon qu'ils transmettent le signal présent à l'entrée de signal (Bi) du point de connexion déterminé vers les sorties de signal (Ao, Co, Do) de tous les autres points de connexion et un signal présent à une entrée de signal (Ai, Ci, Di) d'un autre point de connexion vers la sortie de signal (Bo) du point de connexion déterminé.

2. Elément de base selon la revendication 1, **caractérisé en ce que** l'élément de base comporte quatre points de connexion comprenant chacun une entrée de signal (Ai, Bi, Ci, Di) et une sortie de signal (Ao, Bo, Co, Do).

3. Elément de base selon l'une quelconque des revendications précédentes, **caractérisé en ce que** les moyens de répartition de signaux comprennent un premier circuit logique (4), qui relie les entrées de signal (Ai, Bi, Ci, Di) de tous les points de connexion aux sorties de signal (Ao, Co, Do) des points de connexion qui ne correspondent pas au point de connexion déterminé.

4. Elément de base selon l'une quelconque des revendications précédentes, **caractérisé en ce que** les moyens de répartition de signaux comprennent un deuxième circuit logique (5), qui relie les entrées de signal (Ai, Ci, Di) des points de connexion qui ne correspondent pas au point de connexion déterminé à la sortie de signal (Bo) du point de connexion déterminé.

5. Elément de base selon la revendication 3 ou 4, **caractérisé en ce que** le premier circuit logique (4) et/ou le deuxième circuit logique (5) est un circuit logique ET ou un circuit logique OU.

6. Structure de multiplexage, avec plusieurs éléments de base (2) et plusieurs unités d'émission/réception (1) raccordées aux éléments de base (2) pour l'échange de données entre elles par l'intermédiaire des éléments de base (2), chaque élément de base (2) comportant au moins trois points de connexion présentant chacun une entrée de données (Ai, Bi, Ci, Di) et une sortie de données (Ao, Bo, Co, Do), chaque élément de base (2) présentant des moyens de répartition des données (4, 5) reliés aux diverses entrées de données et sorties de données, les moyens de répartition des données (4, 5) étant configurés de telle façon qu'ils interrompent, pour au moins un point de connexion déterminé auquel l'élément de base respectif (2) est raccordé à un autre élément de base (2), une transmission d'un signal de données présent à l'entrée de données (Bi) de ce point de connexion déterminé vers la sortie de données (Bo) de ce même point de connexion déterminé et qu'ils transmettent, pour au moins un autre point de connexion auquel une des multiples unités d'émission/réception (1) est raccordée, un signal présent à l'entrée de signal (Ai, Ci, Di) de cet autre point de connexion vers la sortie de signal (Ao, Co, Do) de ce même autre point de connexion.

7. Structure de multiplexage selon la revendication 6, **caractérisée en ce que** les éléments de base (2) sont configurés selon l'une quelconque des revendications 1 à 5.

8. Structure de multiplexage selon la revendication 6 ou 7, **caractérisée en ce que** deux éléments de base (2) sont chaque fois raccordés l'un à l'autre par au moins un point de connexion déterminé (Bi, Bo).

9. Structure de multiplexage selon l'une quelconque des revendications 6 à 8, **caractérisée en ce qu'**une unité d'émission/réception (1) est chaque fois raccordée à un point de connexion d'un élément de base (2), qui ne correspond pas au point de connexion déterminé (Bi, Bo).

10. Structure de multiplexage selon l'une quelconque des revendications 6 à 9, **caractérisée en ce que** deux éléments de base (2) reliés l'un à l'autre sont chaque fois raccordés l'un à l'autre au moyen d'un point de connexion, pour lequel les moyens de répartition des données (4, 5) interrompent une transmission d'un signal de données présent à l'entrée de données (Bi) de ce point de connexion vers la sortie de données (Bo) de ce point de connexion.
